# EUROPEAN PATENT APPLICATION

(11) **EP 2 508 412 A1**
(43) Date of publication of application: **10.10.2012**
(21) Application number: 10832923.6
(22) Date of filing: 25.08.2010
(51) Int. Cl.: B62D 21/02, B62D 21/05

(54) **CHASSIS FRAME OF ELECTRIC VEHICLE AND ELECTRIC VEHICLE**

(30) Priority: 30.11.2009 JP 2009272308
(71) Applicant: Hitachi, Ltd., Chiyoda-ku Tokyo 100-8280 (JP)
(72) Inventor: HASHIMOTO, Hiroaki, Chiyoda-ku Tokyo 100-8220 (JP)
(74) Representative: MERH-IP Matias Erny Reichl Hoffmann
(86) International application number: PCT/JP2010/064391
(87) International publication number: WO 2011/065076

(57) **Abstract**

A chassis frame includes: a pair of suspension frames on a front side and a rear side, which are formed by a metal material; and a center frame formed by a fiber reinforced plastic material, with the suspension frames on the front and on the rear side respectively connected to a front-side and a rear-side end thereof, wherein: the suspension frames include side members extending in a front/rear direction, a cross-member connecting the side members and a suspension mounting portion; the center frame includes side members with a hollow section, and a cross-member connecting the side members; and a front-side and a rear-side end of the side members at the center frame are used as connecting portions where side members of the suspension frames are inserted through the two ends, and the side member of the center frame is fastened to the side members of suspension frames with fastening members.

## Description

### THCHINCAL FIELD

The present invention relates to a chassis frame of an electric vehicle and an electric vehicle.

### BACKGROUND ART

Increasing numbers of vehicles manufactured today have monocoque bodies or lightweight chassis frames so as to achieve better fuel efficiency. While much progress has been made in the development of electric vehicles as part of the effort to address the issue of global warming, the need for electric vehicles to achieve lighter weight is as important as the need for lighter-weight conventional vehicles driven with internal combustion engines. A chassis frame for a conventional vehicle, constituted entirely of an aluminum alloy extruded material, has been proposed in the related art (patent literature 1).

### CITATION LIST

### PATENT LITERATURE

Patent literature 1: Japanese Laid Open Patent Publication No. 2008-76552

### SUMMARY OF INVENTION

### TECHNICAL PROBLEM

The weight of an electric vehicle cannot be reduced to a satisfactory extent based upon the teachings of patent literature 1. In other words, the weight of electric vehicles must be further reduced. As a measure for meeting this need, a structure whereby the entire chassis frame is formed by using fiber reinforced plastic has been considered. However, a chassis frame made of fiber reinforced plastic must be formed as a single integrated unit through a pre-impregnation forming process, which is bound to raise the manufacturing cost. In addition, as complex stress concentration occurs in the areas where the suspension is mounted, the required level of strength cannot be easily assured in conjunction with fiber reinforced plastic.

### SOLUTION TO PROBLEM

According to the 1st aspect of the present invention, a chassis frame, comprises: a pair of suspension frames disposed on a front side and a rear side, which are formed by using a metal material; and a center frame formed by using a fiber reinforced plastic material, with the suspension frame disposed on the front side and the suspension frame disposed on the rear side respectively connected to a front-side end and a rear-side end thereof, wherein: the pair of suspension frames each include side members extending in a front/rear direction running frontward and rearward along a vehicle on two sides of the vehicle, a cross-member connecting the side members with each other and a suspension mounting portion at which a suspension is mounted; the center frame includes side members with a hollow section extending in the front/rear direction running frontward and rearward on the two sides of the vehicle, and a cross-member connecting the side members with each other; and a front-side end and a rear-side end of each of the side members at the center frame are used as connecting portions at which side members of the pair of suspension frames are inserted through the two ends in the front/rear direction running frontward and rearward along the vehicle, and the side member of the center frame is fastened to the side members of the pair of suspension frames with fastening members.
According to the 2nd aspect of the present invention, each of the members constituting the center frame according to the 1 st aspect may be molded by using a carbon fiber reinforced plastic material.
According to the 3rd aspect of the present invention, it is preferred that in the chassis frame according to the 1st or 2nd aspect the cross-members of the center frame include at least a pair of cross-member; and the center frame further includes a sub-member located over a central area of the pair of cross-members so as to reinforce the center frame.
According to the 4th aspect of the present invention, it is preferred that in the chassis frame according to the 3rd aspect, the sub-member extends in the front/rear direction running frontward and rearward along the vehicle; the cross-members of the suspension frame disposed on the front side comprise at least a pair of cross-members; the cross-members of the suspension frame disposed on the rear side comprise at least a pair of cross-members; a front side end of the sub-member is fastened to a rear side cross-member of the suspension frame disposed on the front side; and a rear-side end of the sub-member is fastened to a front side cross-member of the suspension frame disposed on the rear side.
According to the 5th aspect of the present invention, it is preferred that in the chassis frame according to the 1 st through 4th aspect, the side members of the center frame comprise square pipe molded by a carbon fiber reinforced plastic material; the side members of the suspension frames inserted through the square pipe assume a shape similar to the square pipe; at the connecting portions of the center frame, liners are provided between a top and a bottom sides on inner surfaces of the side members of the center frame and a top and a bottom sides on outer surfaces of the side members of the suspension frames respectively; and the liners are also fastened with the fastening members.
According to the 6th aspect of the present invention, an electric vehicle comprises: the chassis frame according to any one of the 1st through 5th aspect; a traveling electric drive apparatus mounted either at the suspension frame disposed on the front side or at the suspension frame disposed on the rear side; a battery mounted at the center frame, which provides power to the traveling electric drive apparatus; and an electric wire harness that electrically connects the battery to the traveling electric drive apparatus.
According to the 7th aspect of the present invention, it is preferred that in the electric vehicle according to the 6th aspect, the side members of the suspension frame at which the traveling electric drive apparatus is mounted are formed in a tubular shape and the electric wire harness is routed through a hollow space inside the tubular shape and a hollow space at the side members of the center frame.

### ADVANTAGEOUS EFFECT OF THE INVENTION

According to the present invention, a lighter weight chassis frame assuring full strength is provided. This ultimately makes it possible to provide an electric vehicle with better cruising range.

### BRIEF DESCRIPTION OF THE DRAWINGS

(FIG. 1) A perspective of an electric vehicle with a suspension and wheels mounted at the chassis frame according to the present invention, showing an example of a structure that may be adopted in the undercarriage of the vehicle
(FIG. 2) The chassis frame in FIG. 1 in a perspective
(FIG. 3) The chassis frame in FIG. 1 in a plan view
(FIG. 4) The chassis frame in FIG. 1 in a side elevation
(FIG. 5) A separated plan view of the center frame and the suspension frame in FIG.1
(FIG. 6) A longitudinal sectional view of the fastening portion 416 in FIG. 1
(FIG. 7) A sectional view of the fastening portion 416, taken through line VII - VII in FIG. 6
(FIG. 8) A perspective of the chassis frame illustrating how electrical wire harness may be routed
(FIG. 9) A block diagram of an electric vehicle that may adopt the present invention

### DESCRIPTION OF EMBODIMENT

The following is a detailed description of the chassis frame for an electric vehicle achieved in an embodiment of the present invention, given in reference to the attached drawings. In the following description of the embodiment, the present invention is adopted in the chassis frame of a pure electric vehicle that uses an electric motor as its sole drive source. It is to be noted that the structure achieved in the embodiment described below may be adopted in the chassis frame of an electric vehicle that uses both an internal combustion engine and an electric motor as vehicle drive sources, such as a hybrid vehicle (passenger car).

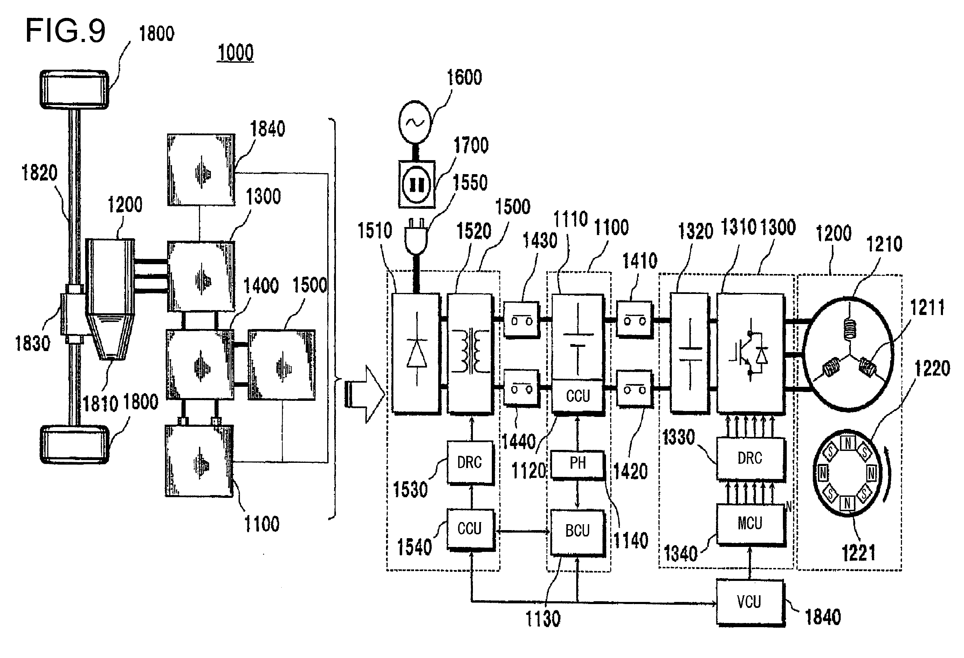

First, in reference to FIG. 9, the dynamo-electric motor drive system of a pure electric vehicle (hereafter simply referred to as an "EV") that includes the chassis frame according to the present invention is described. FIG. 9 shows the structure of the drive system in an EV 1000 and the electrical connections among the various components of the dynamo-electric motor drive system constituting part of the drive system. It is to be noted that the high-power system is indicated with bold solid lines, whereas the low-power system is indicated with thin solid lines in FIG. 9.

An axle 1820 is axially supported so as to be allowed to rotate freely at a front part or a rear part of the vehicle body that is not shown. A pair of drive wheels 1800 are disposed each at one of the two ends of the axle 1820. In addition, an axle with a pair of free wheels disposed at the two ends thereof is axially supported so as to be allowed to rotate freely at the rear part or the front part of the body, which is not shown. While the EV 1000 shown in FIG. 9 is a front wheel drive vehicle with the drive wheels 1800 disposed toward the front and the free wheels disposed toward the rear, the present invention may be adopted in a rear wheel drive EV with the drive wheels 1800 disposed toward the rear and the free wheels disposed toward the front of the vehicle.

A differential gear (hereafter referred to as a "DEF") 1830 is disposed at a central area of the axle 1820. The axle 1820 is mechanically connected to the output side of the DEF 1830. An output shaft of a transmission 1810 is mechanically connected to the input side of the DEF 1830. The DEF 1830 is a differential motive power distribution mechanism that distributes the rotational drive force, the speed of which is altered at the transmission 1810 and is then transmitted from the transmission 1810, to the left and right sides of the axle 1820. The output side of a motor generator 1200 is mechanically connected to the input side of the transmission 1810.

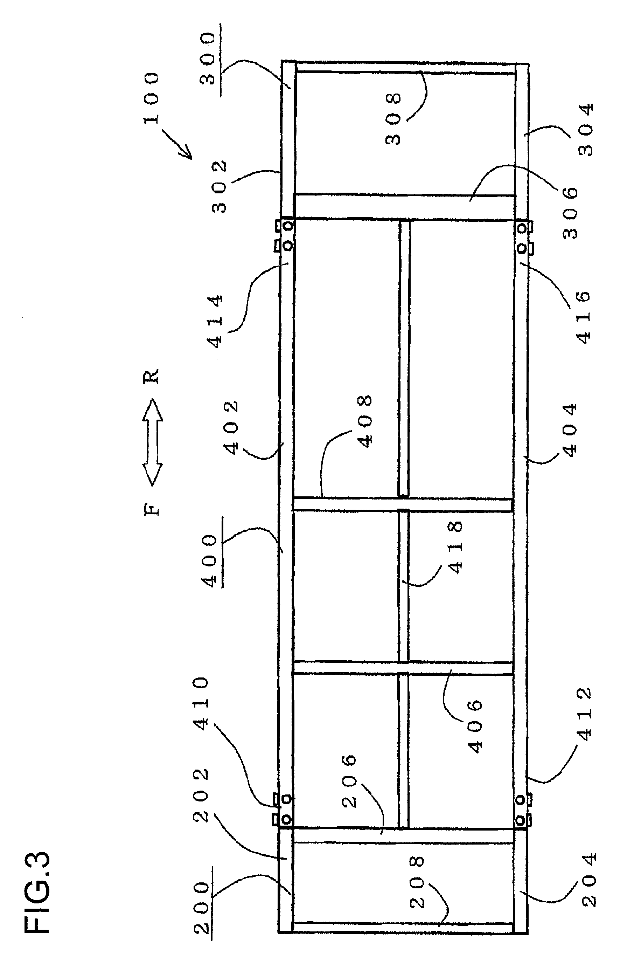

The motor generator 1200 is a rotating electrical machine equipped with an armature (equivalent to the stator in the EV 1000 shown in FIG. 9) 1210 with an armature winding 1211 disposed thereat and a magnetic field (equivalent to the rotor in the EV 1000 shown in FIG. 3) 1220 with permanent magnets 1221 disposed thereat, which is disposed so as to face opposite the armature 1210 via an air gap. The motor generator 1200 functions as a motor when the EV 1000 is engaged in power running operation, whereas it functions as a generator during regenerative operation.

When the motor generator 1200 functions as a motor, the electric energy accumulated in a battery 1100 is supplied to the armature winding 1211 via an inverter device 1300. As a result, the motor generator 1200 generates rotational motive power (mechanical energy) through magnetic action occurring between the armature 1210 and the magnetic field 1220. The rotational motive power output from the motor generator 1200 is transmitted to the axle 1820 via the transmission 1810 and the DEF 1830 and the drive wheels 1800 are thus driven with the rotational motive power.

When the motor generator 1200 functions as a generator, the mechanical energy (rotational motive power) transmitted from the drive wheels 1800 is transmitted to the motor generator 1200 so as to drive the motor generator 1200. As the motor generator 1200 is driven, interlinkage of the magnetic flux from the magnetic field 1220 with the armature winding 1211 occurs, thereby inducing a voltage. The motor generator 1200 generates electric power through this process. The electric power output from the motor generator 1200 is provided to the battery 1100 via the inverter device 1300. The battery 1100 becomes charged with the power thus provided.

The motor generator 1200 is driven with the inverter device 1300 controlling the electric power between the armature 1210 and the battery 1100. In other words, the inverter device 1300 functions as a control device for the motor generator 1200. The inverter device 1300 is a power conversion device that converts DC power to AC power or AC power to DC power through switching operation of switching semiconductor elements. The inverter device 1300 includes a power module 1310, a drive circuit 1330 that drives the switching semiconductor elements mounted at the power module 1310, an electrolytic capacitor 1320 that is electrically connected in parallel to the DC side of the power module 1310 and smooths a DC voltage, and a motor control device 1340 that generates a switching command for the switching semiconductor elements at the power module 1310 and outputs a signal corresponding to the switching command to the drive circuit 1330.

The power module 1310 is a structural unit achieved by mounting six switching semiconductor elements on a substrate and electrically connecting the six switching semiconductor elements through a connecting conductor such as an aluminum wire so as to configure a power conversion circuit constituted with three serial circuits each corresponding to one of three phases and made up with two switching semiconductor elements (an upper arm switching semiconductor element and a lower arm switching semiconductor element) electrically connected with each other in series, which are electrically connected in parallel (in a three-phase bridge connection).

The switching semiconductor elements may be metal oxide film semiconductor field effect transistors (MOSFETs) or insulated gate-type bipolar transistors (IGBTs). A power conversion circuit constituted with MOSFETs does not require an additional diode element to be mounted between the drain electrode and the source electrode of each semiconductor element, since a parasitic diode is present between the drain electrode and the source electrode. However, a power conversion circuit constituted with IGBTs requires an additional diode element to be electrically connected in anti-parallel between the collector electrode and the emitter electrode of each IGBT, since no diode element is present between the collector electrode and the emitter electrode.

The side of each upper arm opposite from the side where it is connected with the lower arm (the collector electrode side in an IGBT) is led out through the DC side of the power module 1310 and is electrically connected to the positive pole side of the battery 1100. The side of each lower arm opposite from the side where it is connected with the upper arm (the emitter electrode side in an IGBT) is led out through the DC side of the power module 1310 and is electrically connected to the negative pole side of the battery 1100. The midpoint between each pair of arms is led out through the AC side of the power module 1310 and is electrically connected to the winding of the corresponding phase in the armature winding 1211. It is to be noted that the midpoint between each pair of arms is the connecting point at which the side of the upper arm where it connects with the lower arm (the emitter electrode side of the upper arm constituted with an IGBT) and the side of the lower arm where it connects with the upper arm (the collector electrode side of the lower arm constituted with an IGBT) are connected with each other.

The electrolytic capacitor 1320 is a smoothing capacitor that eliminates an AC component contained in the DC component, in other words prevents voltage fluctuation attributable to high-speed switching operation of the switching semiconductor elements and the parasitic inductance in the power conversion circuit. As an alternative to the electrolytic capacitor 1320, a film capacitor may be utilized as the smoothing capacitor.

The motor control device 1340 is an electronic circuit device. The motor control device 1340 generates a switching command signal (e.g., a PWM (pulse width modulation) signal) for the six switching semiconductor elements in response to a torque command signal output from a vehicle control device 1840 which executes overall control for the vehicle. The motor control device 1340 then outputs the switching command signal thus generated to the drive circuit 1330.

The drive circuit 1330 is an electronic circuit device that generates a drive signal for the six switching semiconductor elements upon receiving the switching command signal output from the motor control device 1340. The drive circuit 1330 outputs the drive signal thus generated to the gate electrodes of the six switching semiconductor elements.

Based upon a plurality of condition parameters indicating the vehicle operating conditions, such as a torque request from the driver (indicated by the extent to which the accelerator pedal is operated or the throttle opening degree) and the vehicle speed, the vehicle control device 1840 generates a motor torque command signal for the motor control device 1340. Then the vehicle control device 1840 outputs the motor torque command signal to the motor control device 1340.

The battery 1100 is a power source that provides power used to drive the motor generator 1200 and is electrically connected via a junction box 1400 to the inverter device 1300 and a charger 1500. The battery 1100 is a high-voltage battery with a nominal output voltage of 200 V or higher. The battery 1100 may be a lithium ion battery.

It is to be noted that an electric power storage device other than a lithium ion battery, such as a lead acid battery, a nickel hydride battery, an electric double-layer capacitor or a hybrid capacitor, may be used as the battery 1100, instead.

The battery 1100 is a power storage device that is charged and discharged via the inverter device 1300 and the charger 1500 and includes a battery unit 1110 and a control unit as a primary components.

The battery unit 1110, used as an electric energy storage area, is constituted with a plurality of lithium ion battery cells, in which electric energy can be accumulated or from which electric energy can be released (DC power can be charged/discharged), electrically connected in series. The battery unit 1110 is electrically connected to the inverter device 1300 and the charger 1500.

The control unit is an electronic control device constituted with a plurality of electronic circuit components. The control unit manages and controls the conditions of the battery unit 1110 and also controls the inflow/outflow of electric energy at the battery unit 1110 by providing an allowable charge/discharge quantity to the inverter device 1300 and the charger 1500.

The electronic control device is configured so as to include two separate hierarchical functional layers. Namely, it includes a battery control device 1130 and a cell control device 1120. The battery control device 1130 is designated as a higher order (parent) controller within the battery 1100 and the cell control device 1120 is designated as a lower order (child) controller relative to the battery control device 1130.

The cell control device 1120 operations as instructed in a command signal output from the battery control device 1130. The cell control device 1120 includes a plurality of battery management means for individually managing and controlling the states of the plurality of lithium ion battery cells. The plurality of battery management means are each constituted with an integrated circuit (IC). The plurality of integrated circuits are each disposed in correspondence to one of several lithium ion battery cell groups into which the plurality of lithium ion battery cells electrically connected in series are divided. Each integrated circuit individually detects the voltages at the plurality of lithium ion battery cells belonging to the corresponding group and any abnormal condition such as an overcharge or an overdischarge occurring at any of the lithium ion battery cells belonging to the corresponding group. In addition, each integrated circuit discharges any lithium ion battery cell with a state of charge level higher than a predetermined state of charge level whenever the states of charge in the plurality of lithium ion battery cells in the particular group are not uniform. Namely, the plurality of integrated circuits each manages and controls the states of the plurality of lithium ion battery cells in the corresponding group achieve matching states of charge.

The battery control device 1130 is an electronic control device. The battery control device 1130 manages and controls the conditions of the battery unit 1110 and controls the inflow/outflow of electric energy at the battery unit 1110 by providing an instruction indicating the allowable charge/discharge quantity to the vehicle control device 1840 or the motor control device 1340. The battery control device 1130 is equipped with a condition detection means. The condition detection means is constituted with an arithmetic processing device such as a microcomputer or a digital signal processor.

A plurality of signals, including measurement signals output from a current measuring means for measuring the charge/discharge current at the battery unit 1110, a voltage measuring means for measuring the charge/discharge voltage at the battery unit 1110 and a temperature measuring means for measuring the temperatures at the battery unit 1110 and some lithium ion battery cells, detection signals pertaining to the terminal voltages at the plurality of lithium ion batteries, an error signal output from the cell control device 1120, an ON/OFF signal output in response to an ignition switch operation and a signal output from a higher-order control device, i.e., the vehicle control device 1840 or the motor control device 1340, are input to the condition detection means 1 in the battery control device 1130.

Based upon the information carried in the signals input thereto and a plurality of sets of preset information including lithium ion battery cell characteristics information and arithmetic operation information needed when executing arithmetic operation, the condition detection means in the battery control device 1130 executes a plurality of types of arithmetic operations. The plurality of types of arithmetic operations include an arithmetic operation through which the state of charge (SOC), the state of health (SOH) and the like at the battery unit 1110 are detected, an arithmetic operation executed to balance the SOCs in the plurality of lithium ion battery cells and an arithmetic operation through which the charge/discharge quantity at the battery unit 1110 is controlled. Based upon the results of these arithmetic operations, the condition detection means in the battery control device 1130 generates and outputs a plurality of signals. The plurality of signals include a command signal for the cell control device 1120, a signal pertaining to the allowable charge/discharge quantity, which is to be used to control the charge/discharge quantity at the battery unit 1110, a signal related to the SOC in the battery unit 1110 and a signal related to the SOH in the battery unit 1110.

In addition, based upon the error signal output from the cell control device 1120, the condition detection means in the battery control device 1130 generates a plurality of signals including a command signal carrying an instruction for cutting off a first positive pole relay 1410 and a first negative pole relay 1420 and a notification signal used to notify an abnormal condition, and outputs the signals thus generated.

While the battery control device 1130 and the cell control device 1120 are able to exchange signals with each other through a signal transmission path, they are electrically insulated from each other, since they use different operation power sources and operate on reference potentials different from each other. In order to assure reliable electrical isolation, an insulator 1140, such as a photocoupler, a capacitive coupling element or a transformer, is disposed on the signal transmission path connecting the battery control device 1130 with the cell control device 1120. Through these measures, the battery control device 1130 and the cell control device 1120 are able to engage in signal transmission with signals assuming reference potentials different from each other.

The electric energy accumulated in the battery 1100 is utilized as drive power to drive the dynamo-electric motor drive system that enables the EV 1000 to engage in traveling operation. Electric energy is accumulated in the battery 1100 with regenerative power generated through regenerative operation of the dynamo-electric motor drive system, power taken in from a commercial residential power source or power purchased at an electricity kiosk.

The battery 1100 is charged through a commercial residential power source 1600 or a power-feed device at an electricity kiosk by electrically connecting the charger 1500 to the commercial residential power source 1600 or to the power-feed device at the electricity kiosk. Namely, a power plug 1550 at the front end of a power cable, which is electrically connected to an external power source connector terminal of the charger 1500 is connected to an outlet 1700 located on the commercial residential power source 1600 or a power cable extending from the power-feed device at the electricity kiosk is connected to the external power source connector terminal of the charger 1500. Once the electrical connection is established, AC power is supplied from the commercial residential power source 1600 or the power-feed device at the electricity kiosk to the charger 1500. The AC power thus supplied is converted to DC power at the charger 1500, which further adjusts the DC power so as to provide it as a charge voltage to the battery 1100. As a result, the battery 1100 becomes charged.

It is to be noted that the battery 1100 is charged with power provided via the power-feed device at the electricity kiosk in basically the same manner as that with which the battery 1100 is charged via the commercial residential power source 1600. However, the capacity of the electric current supplied from the power-feed device at the electricity kiosk and the length of time required to charge the battery 1100 with the power supplied from the power-feed device at the electricity kiosk are different from those of the battery charge via the commercial residential power source 1600. Namely, the battery 1100 can be charged in less time via the power-feed device at the electricity kiosk with a higher current capacity compared to the commercial residential power source 1600.

The charger 1500 is a power conversion device, the primary components of the charger 1500 include an AC/DC conversion circuit 1510, a voltage booster circuit 1520, a drive circuit 1530 and a charge control device 1540. The charger 1500 converts the AC power supplied from the commercial residential power source 1600 or the AC power supplied from the power-feed device at the electricity kiosk to DC power. The charger 1500 then raises the voltage of the DC power resulting from the conversion to a level required of the charge voltage for the battery 1100 and supplies the charge voltage to the battery 1100.

The AC/DC conversion circuit 1510 is a power conversion circuit that converts the AC power supplied from the external power source to DC power and outputs the DC power resulting from the conversion. The AC/DC conversion circuit 1510 may be configured by assembling a plurality of diode elements through a bridge connection. The AC/DC conversion circuit 1510 includes a rectifier circuit used to rectify the AC power supplied from the external power source to DC power and a power factor improving circuit electrically connected on the DC side of the rectifier circuit, through which the power factor of the output from the rectifier circuit is improved. Alternatively, AC power may be converted to DC power via a circuit constituted with a plurality of switching semiconductor elements connected in a bridge connection with diode elements connected in an anti-parallel configuration.

The voltage booster circuit 1520 is a power conversion circuit that boosts the voltage of the DC power output from the AC/DC conversion circuit 1510 (power factor improving circuit) to a level required of the charge voltage for the battery 1100, and may be constituted with, for instance, an isolated DC/DC converter. An isolated DC/DC converter comprises a transformer, a conversion circuit, a rectifier circuit, a smoothing reactor and a smoothing capacitor. The conversion circuit is electrically connected to a primary winding of the transformer and is constituted with a plurality of switching semiconductor elements connected in a bridge connection. The conversion circuit converts the DC power output from the AC/DC conversion circuit 1510 to AC power and inputs the AC power resulting from the conversion to the primary winding of the transformer. The rectifier circuit is electrically connected to a secondary winding of the transformer and is constituted with a plurality of diode elements connected in a bridge connection. The rectifier circuit rectifies AC power generated at the secondary winding of the transformer to DC power. The smoothing reactor is electrically connected in series to the positive pole side of the output (DC side) of the rectifier circuit. The smoothing capacitor is electrically connected in parallel between the positive electrode and the negative electrode on the output side (DC side) of the rectifier circuit.

The charge control device 1540 is an electronic circuit device configured by mounting a plurality of electronic components, including arithmetic processing device, e.g., a microcomputer, at a circuit substrate. The charge control device 1540 controls the timing with which a charge of the battery 1100 by the charger 1500 ends/starts, and controls the power, the voltage, the current and the like supplied from the charger 1500 to the battery 1100 during the charge. More specifically, the charge control device 1540 generates a switching command signal, (e.g., a PWM (pulse width modulation) signal) for the plurality of switching semiconductor elements in the voltage booster circuit 1520 based upon a signal input thereto from the vehicle control device 1840 or a signal input thereto from a control device in the battery 1100. The charge control device 1540 then outputs the switching command signal thus generated to the drive circuit 1530.

The vehicle control device 1840 monitors the voltage on, for instance, the input side of the charger 1500. Upon deciding that the charger 1500 has entered a charge start state with the charger 1500 electrically connected to the external power source and a voltage applied to the input side of the charger 1500, the vehicle control device 1840 outputs a charge start command signal to the charge control device 1540 so as to start a charge. Upon deciding, based upon a battery condition signal output from the control device in the battery 1100, that the battery 1100 has achieved a fully charged state, the vehicle control device 1840 outputs a charge end command signal to the charge control device 1540 so as to end the charge. These operations may be executed by the motor control device 1340 or the control device in the battery 100, or they may be executed by the charge control device 1540 in cooperation with the control device in the battery 1100.

The control device in the battery 1100 calculates through arithmetic operation an allowable charge quantity for the battery 1100 by detecting the conditions of the battery 1100 and outputs a signal indicating the arithmetic operation results to the charger 1500, so as to control the charge of the battery 1100 by the charger 1500.

The drive circuit 1530 is an electronic circuit device configured by mounting a plurality of electronic components such as a switching semiconductor element and an amplifier, at a circuit substrate. The drive circuit 1530 generates a drive signal for the plurality of switching semiconductor elements in the voltage booster circuit 1520 in response to the command signal output from the charge control device 1540 and outputs the drive signal to the gate electrodes of the plurality of switching semiconductor elements.

It is to be noted that in a configuration with the AC/DC conversion circuit 1510 constituted with switching semiconductor elements, a switching command signal for the switching semiconductor elements in the AC/DC conversion circuit 1510 is output from the charge control device 1540 to the drive circuit 1530. Then a drive signal for the switching semiconductor elements in the AC/DC conversion circuit 1510 is output from the drive circuit 1530 to the gate electrodes of the switching semiconductor elements in the AC/DC conversion circuit 1510. The switching operation of the switching semiconductor elements in the AC/DC conversion circuit 1510 is controlled based upon the signals output as described above.

First and second positive pole side relays 1410 and 1430 and first and second negative pole side relays 1420 and 1440 are housed inside the junction box 1400.

The first positive pole side relay 1410 is a switch via which the electrical connection between the DC positive pole side of the inverter device 1300 (power module 1310) and the positive pole side of the battery 1100 is controlled. The first negative pole side relay 1420 is a switch via which the electrical connection between the DC negative pole side of the inverter device 1300 (power module 1310) and the negative pole side of the battery 1100 is controlled. The second positive pole side relay 1430 is a switch via which the electrical connection between the DC positive pole side of the charger 1500 (voltage booster circuit 1520) and the positive pole side of the battery 1100 is controlled. The second negative pole side relay 1440 is a switch via which the electrical connection between the DC negative pole side of the charger 1500 (voltage booster circuit 1520) and the negative pole side of the battery 1100 is controlled.

The first positive pole side relay 1410 and the first negative pole side relay 1420 are closed, either in an operation mode in which rotational motive power from the motor generator 1200 is needed or in an operation mode in which power needs to be generated at the motor generator 1200. The first positive pole side relay 1410 and the first negative pole side relay 1420 are opened when the vehicle is in a stop mode (with the ignition switch open) when a fault has occurred in the dynamo-electric motor drive device or in the vehicle or when the battery 1100 is charged with the charger 1500. The second positive pole side relay 1430 and the second negative pole side relay 1440, on the other hand, are closed when the battery 1100 is charged with the charger 1500. The second position pole side relay 1430 and the second negative pole side relay 1440 are opened when the charge of the battery 1100 by the charger 1500 ends or when an abnormality has occurred in the charger 1500 or in the battery 1100.

The open/close state at the first positive pole side relay 1410 and the first negative pole side relay 1420 is controlled with an open/close command signal output from the vehicle control device 1840. However, the open/close state at the first positive pole side relay 1410 and the first negative pole side relay 1420 may be controlled with an open/close command signal output from another control device such as the motor control device 1340 or the control device in the battery 1100. The open/close state at the second positive pole side relay 1430 and the second negative pole side relay 1440 is controlled with an open/close command signal output from the charge control device 1540. However, the open/close state at the second positive pole side relay 1430 and the second negative pole side relay 1440 may be controlled with an open/close command signal output from another control device such as the vehicle control device 1840 or the control device in the battery 1100.

As described above, the first positive pole side relay 1410 and the first negative pole side relay 1420 are disposed between the battery 1100 and the inverter device 1300 and the second positive pole side relay 1430 and the second negative pole side relay 1440 are disposed between the battery 1100 and the charger 1500 in the EV 1000 so as to control the electrical connections among the battery 1100, the inverter device 1300 and the charger 1500. As a result, a high level of safety is assured for the electric drive apparatus which is a high-voltage system.

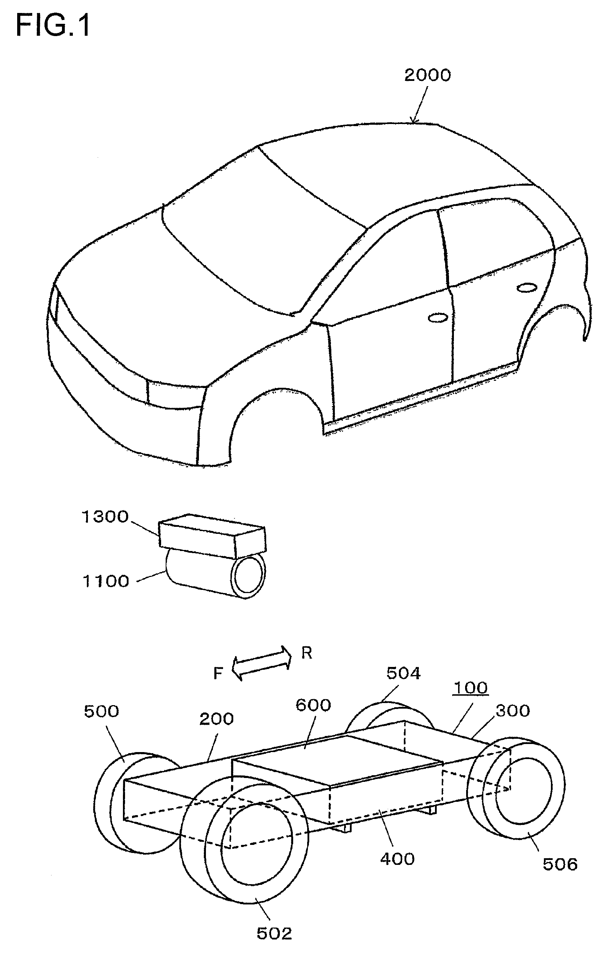

FIG. 1 shows the undercarriage of an electric vehicle EV built on a chassis frame 100 achieved in an embodiment of the present invention. The chassis frame 100 of the electric vehicle includes a center frame 400 and suspension frames 200 and 300 connected at the two ends of the center frame 400, one located on the front side (indicated by F in the figure) and the other located on the rear side (indicated by R in the figure) relative to the center frame 400. The components constituting the electric drive apparatus that enables the electric vehicle to engage in traveling operation, such as the motor generator 1200 and the inverter device 1300, are mounted at the front-side suspension frame 200 which is part of the chassis frame 100. The battery 1600 is mounted at the center frame 400. The battery 1600, which includes a plurality of cells such as lithium ion battery cells housed in a battery casing, is capable of outputting high voltage power, as high as several hundred V. A body 2000 is disposed at the top surface of the chassis frame 100, and a cabin space is created by attaching side panels and the like to the body 2000.

During traveling operation, large loads originating from the suspension and wheels 500, 502, 504 and 506, are applied to the suspension frames 200 and 300 to which the wheels 500 and 502 and the wheels 504 and 506 are mounted via the suspension (not shown). As a result, complex stress concentrations occur at the suspension frames 200 and 300. Accordingly, the chassis frame 100 is achieved in the embodiment of the present invention by forming the suspension frames 200 and 300 molded by a metal material and by forming the center frame 400 molded by a carbon fiber reinforced plastic material as described below. It is to be noted that the wheels 500, 502, 504 and 506 are equivalent to the drive wheels 1800 in FIG. 9.

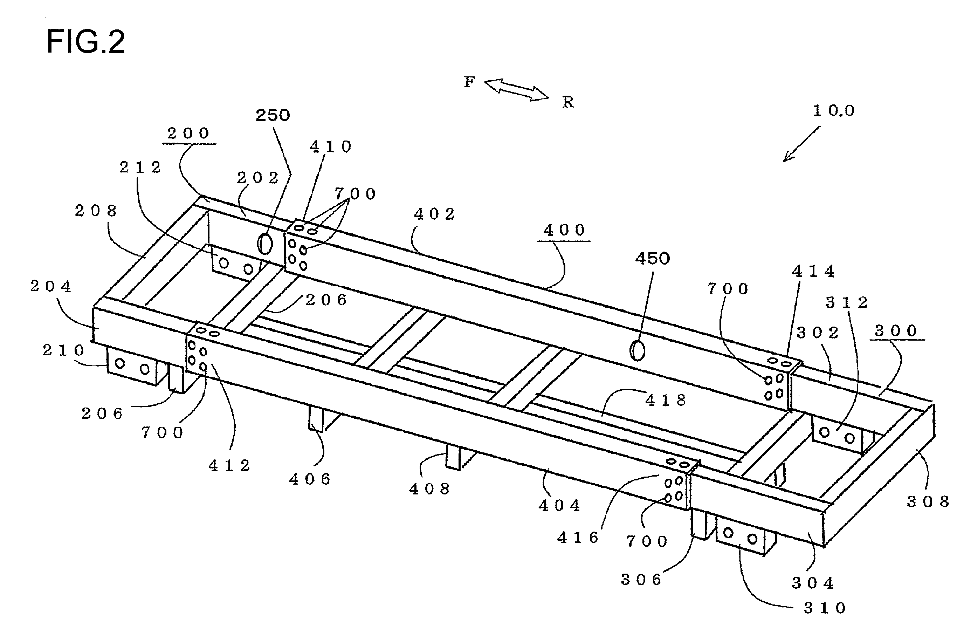

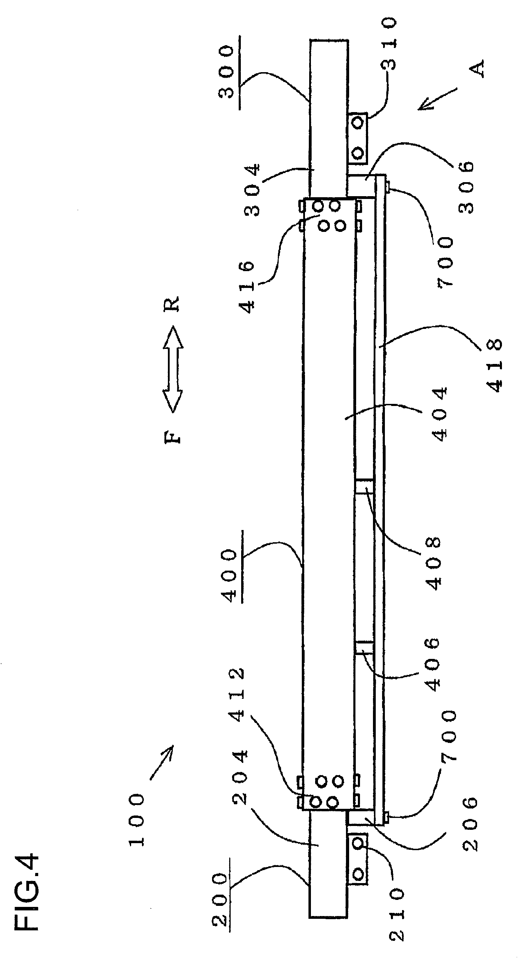

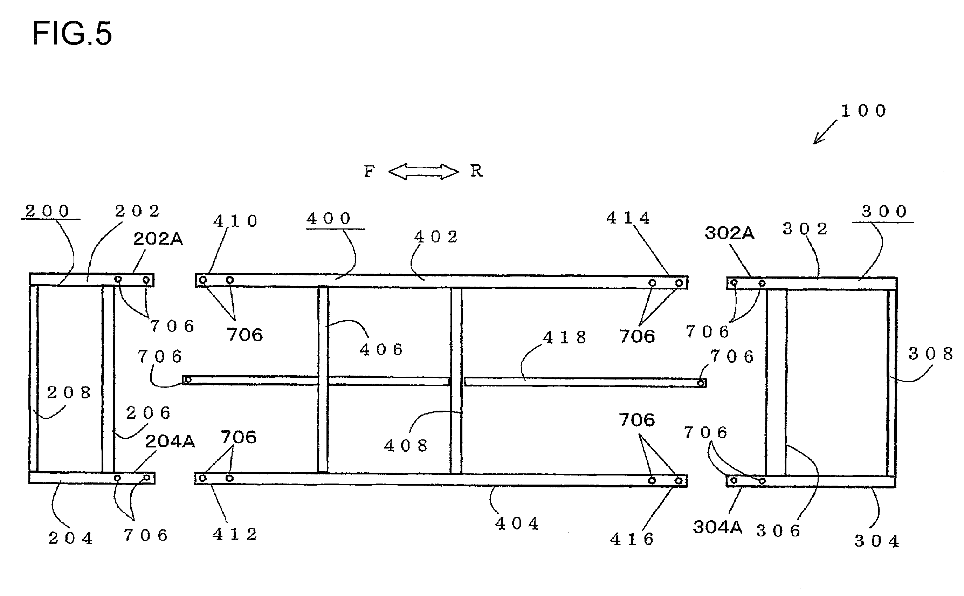

In reference to FIGS. 2 through 5, the structures of the suspension frames 200 and 300 and the center frame 400 are described. FIG. 2 shows the chassis frame 100 in a perspective, FIG. 3 shows the chassis frame 100 in a plan view, FIG. 4 shows the chassis frame 100 in a side elevation and FIG. 5 shows the chassis frame parts in an unassembled state.

The front-side suspension frame 200, which includes side members 202 and 204 extending in the front/rear direction on the two sides of the vehicle and cross-members 206 and 208 connecting the right side member 202 and the left side member 204 with each other at their ends, is formed in the shape of a frame. As shown in FIG. 2, rear-side ends 202A and 204A of the side members 202 and 204 project out further rearward relative to the cross-member 208. These projecting portions 202A and 204A function as connecting portions via which the front-side suspension frame 200 is connected to the center frame 400. An electric wiring opening 250 is formed in the side member 202 at its side surface located toward the inside of the vehicle. Brackets 210 and 212, via which a front wheel suspension (not shown) is to be mounted, are disposed at the front-side suspension frame 200.

The rear-side suspension frame 300, which includes side members 302 and 304 extending in the front/rear direction on the two sides of the vehicle and cross-members 306 and 308 connecting the right side member 302 and the left side member 304 with each other at their ends, is formed in the shape of a frame. As shown in FIG. 2, front ends 302A and 304A of the side members 302 and 304 project out further frontward relative to the cross-member 306. These projecting portions 302A and 304A function as connecting portions via which the rear-side suspension frame 300 is connected to the center frame 400. Brackets 310 and 312, via which a suspension (not shown) is to be mounted, are disposed at the rear-side suspension frame 300.

The side members 202, 204, 302 and 304 and the cross-members 206, 208, 306 and 308 are molded by using square pipes (with a hollow section) constituted of a metal material, e.g., steel, or a nonferrous metal such as an aluminum alloy, so as to achieve lighter weight while assuring sufficient strength.

The center frame 400 includes side members 402 and 404 extending in the front/rear direction on the two sides of the vehicle, cross-members 406 and 408 that connect the right side member 402 to the left side member 404 at two middle positions, and a sub-member 418 that connects the cross-members 406 and 408 over a central area. An electric wiring opening 450 is formed in the side member 402 at its side surface located toward the inside of the vehicle. The battery 1600 is disposed over the cross-members 406 and 408 and is locked to the cross-members 406 and 408.

Since the load applied to the center frame 400 is not as complex or large as those applied to the suspension frames 200 and 300, the side members 402 and 404, the cross-members 406 and 408 and the sub-member 418 are molded as an integrated single piece member by using a square pipe (with a hollow section) constituted of a lightweight material such as carbon fiber reinforced plastic, different from the material used to form the suspension frames 200 and 300.

The side member 402 includes fastening portions 410 and 414 located at the two ends thereof, one toward the front and the other toward the rear, whereas the side member 404 includes fastening portions 412 and 416 located at the two ends thereof, one toward the front and the other toward the rear. The center frame 400 is connected to the side members 202 and 204 of the front-side suspension frame 200 at the fastening portions 410 and 412. The center frame 400 is connected to the side members 302 and 304 of the rear-side suspension frame 300 at the fastening portions 414 and 416.

As shown in FIG. 5, through holes 706, through which fastening members 700 are to be inserted, are formed in advance at the side members 202, 204, 302, 304, 402 and 404. In addition, although not shown in FIG. 5, similar through holes 706, through which fastening members 700 are to be inserted in order to mount the sub-member 418, are formed in advance at the cross-members 206, 306, 406 and 408.

The rear ends 202A and 204A of the side members 202 and 204 constituting the front-side suspension frame 200 are respectively inserted at the front side fastening portions 410 and 412 of the side members 402 and 404. The front-side suspension frame 200 is connected to the center frame 400 with rivets 700 via the through holes 706. The front ends 302A and 304A of the side members 302 and 304 constituting the rear-side suspension frame 300 are respectively inserted at the rear side fastening portions 414 and 416 of the side members 402 and 404. The rear-side suspension frame 300 is connected to the center frame 400 with rivets 700 via the through holes 706.

The front end of the sub-member 418 is fastened to the rear side cross-member 206 of the front-side suspension frame 200 with rivets 700 via the through holes 706. The rear end of the sub-member 418 is fastened to the front side cross-member 306 of the rear-side suspension frame 300 with rivets 700 via the through holes 706. The cross-members 406 and 408 are connected to each other via the sub-member 418. As a result, better strength and rigidity are assured at the center frame 400 against downward flexure and furthermore, the cross-members 406 and 408 are reinforced with the two ends of the center frame 400 supported with the suspension frames 200 and 300.

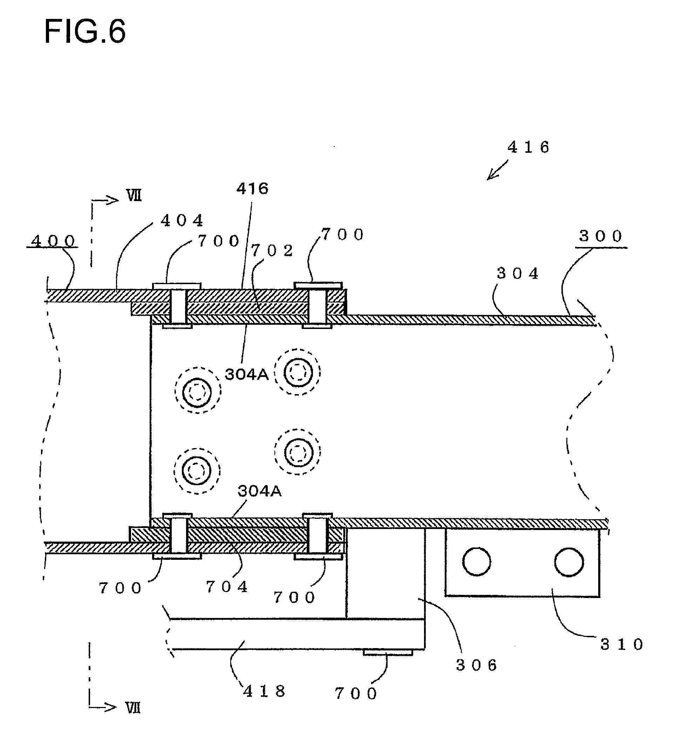

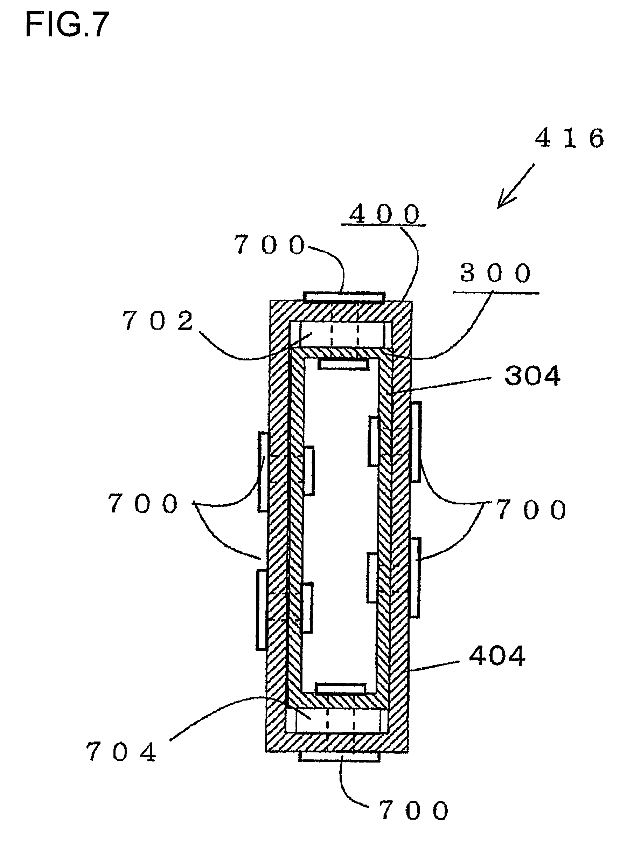

In reference to FIGS. 6 and 7, the connecting structures adopted in the areas where fastening portions 410 through 416 are connected to the suspension frames 200 and 300 are described in further detail. Since the connecting structures adopted in conjunction with the fastening portions 410 through 416 are all similar to one another, the connecting structure of the fastening portion 416 is described as a typical example.

The side member 304 of the rear-side suspension frame 300 is inserted through the side member 404 of the center frame 400, with rivets 700 locking them together. More specifically, the projecting portion 304A of the side member 304 is fitted in the connecting portion 416 of the side member 404, liners 702 and 704 are inserted respectively between the top side outer surface of the side member 304 and the top side inner surface of the side member 404 and between the bottom side outer surface of the side member 304 and the bottom side inner surface of the side member 404, and the side members 304 and 404 are fastened together with rivets 700. The fastening members 700 pass through the liners 702 and 704 so as to prevent the liners 702 and 704 from shifting or falling out. The liners 702 and 704, which may be constituted of, for instance, a nonferrous metal or a plastic material, are inserted so as to prevent wear of, and damage to the side member 404 by buffering it from direct contact with the side member 304. Furthermore, the side members 304 and 404 are firmly fastened to each other at their side surfaces with rivets 700.

With the side members fitted and fastened together as described above, the center frame 400 and the suspension frames 200 and 300 are firmly fastened to each other. As a result, the chassis frame 100 according to the present invention can be provided as a lightweight frame which, as a whole, assures a sufficient level of strength.

The assembly procedure to be followed when assembling the chassis frame is explained next.
The suspension frames 200 and 300 and the center frame 400 are individually manufactured. The suspension frames 200 and 300 are inserted at the two ends of the center frame 400 and the various members are fastened with the rivets 700. The front wheel suspension is mounted at the brackets 210 and 212 located at the front-side suspension frame 200 and also, the rear-side suspension is mounted at the brackets 310 and 312 located at the rear-side suspension frame 300. The axle of the front wheels 500 and 502 are mounted via the front suspension and the axle of the rear wheels 504 and 506 is mounted via the rear suspension.

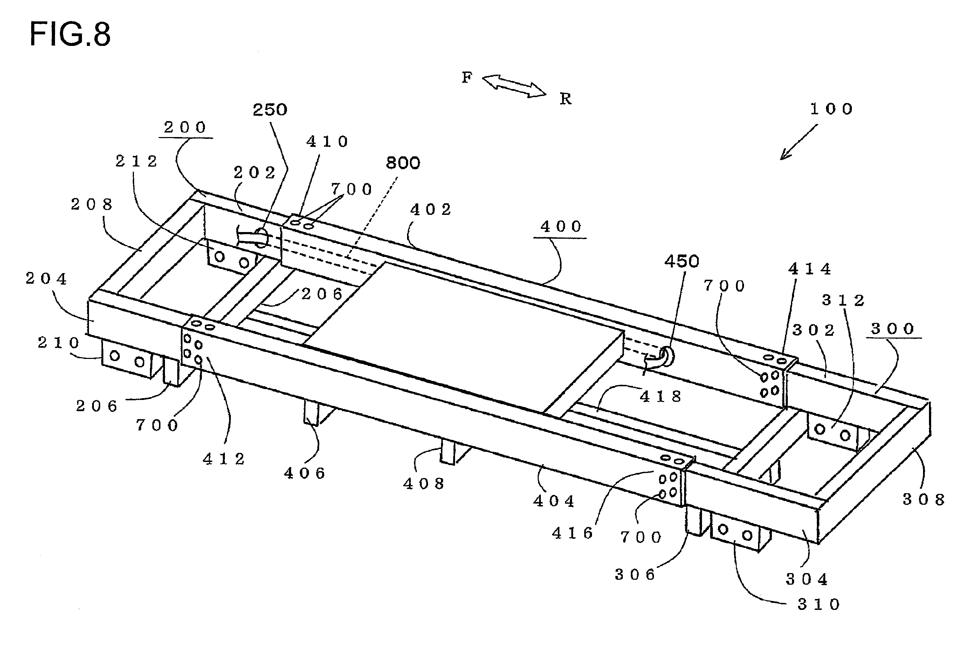

The body (not shown) is disposed on top of the chassis frame 100 and the cabin space is formed by mounting side panels and the like at the body. The electric vehicle drive system constituted with a drive motor, an inverter and the like (none shown) is mounted at the front-side suspension frame 200 constituting part of the chassis frame 100, whereas the battery 1600 is mounted at the center frame 400. Then, as shown in FIG. 8, the battery 1600 is connected with the drive system electric circuit constituted with the inverter and the like through an electrical wire harness 800. The electrical wiring opening 250 is formed at the side surface, located toward the inside of the vehicle, of the side frame 202 constituting part of the front-side suspension frame 200. In addition, the electric wiring opening 450 is formed on the inside side surface of the side frame 402, which constitutes part of the center frame 400. The electric wire harness 800, inserted into the hollow portion of the side member 202 through the opening 250 at the side member 202, is routed around inside the hollow portion of the side frame 402, out of the side member 402 through the opening 450 at the side member 402 and connected to the battery 1600.

By routing the electric wire harness 800 connecting the electric drive apparatus and the battery 1600 through the hollow space inside the side members, better efficiency is achieved with regard to the use of installation space for the electric wire harness 800.

The embodiment described above allows for the following variations.
(1) While rivets are used as fastening members for fastening the center frame 400 to the front-side and rear-side suspension frames 200 and 300, they may be fastened together by using a different fastening means such as nuts and bolts. Likewise, the sub-member 418 may be fastened to the center frame 400 and to the front-side and rear-side suspension frames 200 and 300 via another fastening means such as nuts and bolts.

(2) While the center frame 400 in the embodiment is formed by using a carbon fiber reinforced plastic material, it may be formed by using another type of fiber reinforced plastic material assuring the required level of mechanical strength, such as an aramid fiber reinforced plastic material.

(3) While the various members constituting the center frame 400 are formed into an integrated single-piece member, the individual members may be formed separately and they may then be fastened together with rivets or bolts. As an alternative, the sub-member 418 alone may be prepared as a separate member and fastened to the center frame 400, the front-side suspension frame 200 and the rear-side suspension frame 300.
It is to be noted that the chassis frame according to the present invention does not need to include the sub-member 418.

(4) In order to withstand the large load to which the suspension frame 300 is subjected primarily applied along the up/down direction, the liners 702 and 704 are disposed above and under the side member 304. However, depending upon the particulars of typical load conditions, the suspension frame 300 may be designed to include a liner disposed either on the upper side or on the lower side of the side member 304. Alternatively, a liner may be disposed on each of the two lateral sides of the side member 304 or on one of the two lateral sides of the side member 304.

(5) The sub-member 418 may extend along a diagonal direction instead of the front/rear direction running toward the front side and the rear side of the vehicle. In addition, more cross-members may be disposed to dispense with the sub-member.

It is to be noted that the embodiment described above simply represents an example and the present invention is in no way limited to this example as long as the features characterizing the present invention remain intact. While the invention has been particularly shown and described with respect to preferred embodiments thereof by referring to the attached drawings, the present invention is not limited to these examples and it will be understood by those skilled in the art that various changes in form and detail may be made therein without departing from the spirit, scope and teaching of the invention. Accordingly, the structural details pertaining to the center frame 400 and the front-side and rear-side suspension frames 200 and 300 having been described in reference to the embodiment do not limit the present invention in any way whatsoever.

The disclosure of the following priority application is herein incorporated by reference:
Japanese Patent Application No. 2009-272308 filed November 30, 2009

## Claims

1. A chassis frame, comprising:
a pair of suspension frames disposed on a front side and a rear side, which are formed by using a metal material; and
a center frame formed by using a fiber reinforced plastic material, with the suspension frame disposed on the front side and the suspension frame disposed on the rear side respectively connected to a front-side end and a rear-side end thereof, wherein:
the pair of suspension frames each include side members extending in a front/rear direction running frontward and rearward along a vehicle on two sides of the vehicle, a cross-member connecting the side members with each other and a suspension mounting portion at which a suspension is mounted;
the center frame includes side members with a hollow section extending in the front/rear direction running frontward and rearward on the two sides of the vehicle, and a cross-member connecting the side members with each other; and
a front-side end and a rear-side end of each of the side members at the center frame are used as connecting portions at which side members of the pair of suspension frames are inserted through the two ends in the front/rear direction running frontward and rearward along the vehicle, and the side member of the center frame is fastened to the side members of the pair of suspension frames with fastening members.

2. A chassis frame according to claim 1, wherein:
each of the members constituting the center frame is molded by using a carbon fiber reinforced plastic material.

3. A chassis frame according to claim 1 or claim 2, wherein:
the cross-members of the center frame include at least a pair of cross-member; and
the center frame further includes a sub-member located over a central area of the pair of cross-members so as to reinforce the center frame.

4. A chassis frame according to claim 3, wherein:
the sub-member extends in the front/rear direction running frontward and rearward along the vehicle;
the cross-members of the suspension frame disposed on the front side comprise at least a pair of cross-members;
the cross-members of the suspension frame disposed on the rear side comprise at least a pair of cross-members;
a front side end of the sub-member is fastened to a rear side cross-member of the suspension frame disposed on the front side; and
a rear-side end of the sub-member is fastened to a front side cross-member of the suspension frame disposed on the rear side.

5. A chassis frame according to any one of claims 1 through 4, wherein:
the side members of the center frame comprise square pipe molded by a carbon fiber reinforced plastic material;
the side members of the suspension frames inserted through the square pipe assume a shape similar to the square pipe;
at the connecting portions of the center frame, liners are provided between a top and a bottom sides on inner surfaces of the side members of the center frame and a top and a bottom sides on outer surfaces of the side members of the suspension frames respectively; and
the liners are also fastened with the fastening members.

6. An electric vehicle, comprising:
the chassis frame according to any one of claims 1 through 5;
a traveling electric drive apparatus mounted either at the suspension frame disposed on the front side or at the suspension frame disposed on the rear side;
a battery mounted at the center frame, which provides power to the traveling electric drive apparatus; and
an electric wire harness that electrically connects the battery to the traveling electric drive apparatus.

7. An electric vehicle according to claim 6, wherein:
the side members of the suspension frame at which the traveling electric drive apparatus is mounted are formed in a tubular shape and the electric wire harness is routed through a hollow space inside the tubular shape and a hollow space at the side members of the center frame.
